# EUROPEAN PATENT APPLICATION

(11) **EP 3 287 648 A1**
(43) Date of publication of application: **28.02.2018**
(21) Application number: 16782857.3
(22) Date of filing: 22.02.2016
(51) Int. Cl.: F16B 37/04, F16B 5/02

(54) **BLIND NUT AND MOUNTING STRUCTURE FOR SAME**

(30) Priority: 21.04.2015 JP 2015086518
(71) Applicant: Newfrey LLC, New Britain, CT 06053 (US)
(72) Inventor: MAKINO, Takanori, Toyohashi-shi Aichi 441-8540 (JP); SAKODA, Kanji, Toyohashi-shi Aichi 441-8540 (JP)
(74) Representative: Haarpatent Patentanwälte Krämer Meyer
(86) International application number: PCT/JP2016/055005
(87) International publication number: WO 2016/170835

(57) **Abstract**

[Problem to be Solved by the Invention]

An object of the present invention is to provide a blind nut with a low height after it is fastened, with a small outer diameter that is lightweight.

[Means for Solving the Problem]

Blind nut 10 to be mounted onto hole 43 of mounted member 41 comprises main body 20, which is formed with a plastically deformable soft material, and nut member 30, which is formed with a hard material. Main body 20 comprises first tubular member 21, which takes a cylindrical shape; second tubular member 22, which takes a hexagonal cylindrical shape and which is provided adjacent to first tubular member 21; and flange 24, which is provided adjacent to second tubular member 22. In addition, center holes 25 and 26 are formed on main body 20. Nut member 30 comprises nut base 31, which takes a short cylindrical shape; nut cylinder members 32, 33, which are provided adjacent to nut base 31, with a smaller outer diameter than that of the nut base 31. In addition, a pass-through hole 35, on which female screw 37 is provided across the entire length of nut member 30, is formed thereon. The nut cylinder members 32, 33 of the nut member 30 are provided inside of the first tubular member 21 and the second tubular member 22; and the lower edge of the first tubular member 21 is in contact with step 31a of the nut base 31 and is welded thereto.

## Description

### [Technical Field of the Invention]

The present invention relates to a blind nut and a mounting structure thereof, and in particular to a blind nut wherein the post-fastening height is short as well as a mounting structure wherein the blind nut is mounted onto a mounted member thereof.

### [Background Art]

A blind nut comprises a female screw member in which a female screw is formed, a hollow tubular member is provided adjacent to the female screw member and a tubular flange which has an opening on one end. When the tubular member of the blind nut is inserted into the mounting hole of the mounted member to cause the flange to be in contact with the surface of the mounted member, plastic deformation is carried out by using a fastening tool in order to enlarge the diameter of the tubular member, and the mounted member is sandwiched between the deformed tubular member and the flange. In this way, the blind nut is fixated onto the mounted member. When a male screw of a bolt engages with the female screw member of the blind nut fixated onto the mounted member, another mounting member can be further mounted.

When a blind nut is utilized, work can be performed from one side of the mounted member, and thus it can be utilized to fasten a nut onto a mounted member which cannot be worked on from the rear side, exemplified as a panel, and the like.

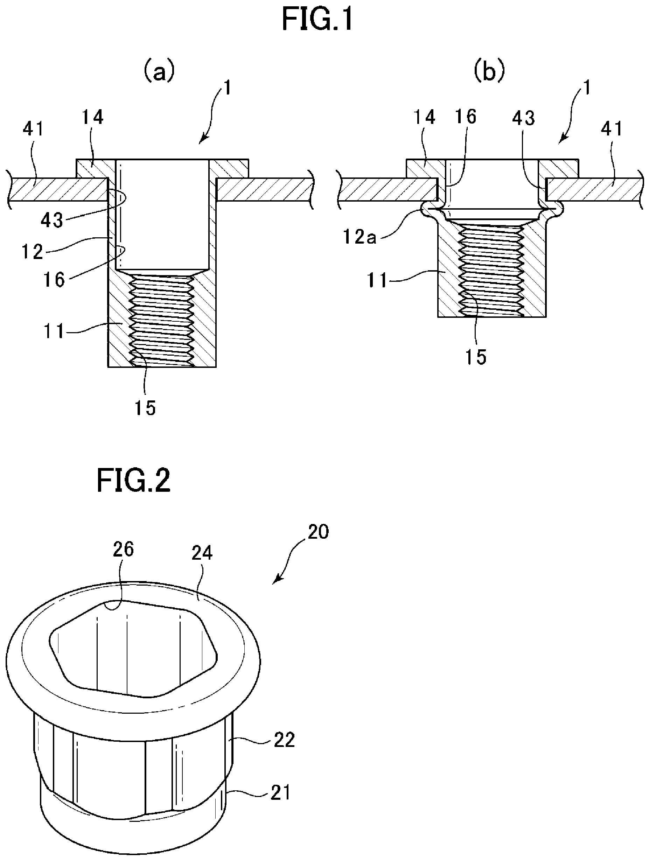

Figure 1 shows blind nut 1 of prior art. Figure 1(a) is a cross-sectional view showing blind nut 1 of prior art set in mounting hole 43 of mounted member 41. Blind nut 1 takes an overall cylindrical shape which is axially symmetrical around the central axis and has a female screw member 11 on one end. Female screw member 11 takes a cylindrical shape and has a female screw 15 formed therein. A male screw of a screw mandrel (not shown in the figures) of a fastening tool can be engaged with female screw 15. Tubular member 12, which extends from female screw member 11, is thinner than female screw member 11 and is plastically deformed when mounted onto mounted member 41.

Blind nut 1 has a flange 14 on the side opposite female screw member 11. The outer diameter of flange 14 is larger than the inner diameter of mounting hole 43 of mounted member 41. Pass-through hole 16 is formed from the edge of flange 14 to the edge of female screw member 11. The inner diameter of pass-through hole 16 is constant from the edge of flange 14 to tubular member 12; it becomes smaller at female screw member 11.

Figure 1(b) is a cross-sectional view showing a blind nut 1 that has been mounted onto mounted member 41. When blind nut 1 is mounted by means of a fastening tool, tubular member 12, which is thinner, is plastically deformed so that the diameter thereof expands to form enlarged-diameter portion 12a; mounted member 41 is sandwiched between enlarged-diameter portion 12a and flange 14. In this way, blind nut 1 is mounted onto mounted member 41.

A brief explanation of the method for fastening blind nut 1 onto mounted member 41 is provided below. When blind nut 1 is inserted into mounting hole 43 of mounted member 41, the lower surface of flange 14 stops when it touches the upper surface of mounted member 41. The screw mandrel of the exclusive-use fastening tool is caused to be engaged with female screw 15 of female screw member 11 of blind nut 1, and the nose piece (not shown in the figures) of the fastening tool is in contact with the upper surface of flange 14. Subsequently, female screw member 11 is forcefully pulled by utilizing the screw mandrel of the fastening tool; tubular member 12 is plastically deformed and is thin, so that its diameter is enlarged to form enlarged-diameter portion 12a. Mounted member 41 is sandwiched between enlarged-diameter portion 12a and flange 14 and thus fixated therein.

In a blind nut of prior art, female screw member 11 is provided below thin tubular member 12. As the diameter of tubular member 12 is enlarged by the blind nut, tubular member 12 is made of a material with a degree of hardness low enough to be plastically deformed. Due to the foregoing, in order to obtain enough strength to retain the screw, female screw member 11 must be of a certain length.

Therefore, the entire length of the blind nut has been considerably long. Moreover, a process for increasing the strength of female screw member 11 by quenching it has been needed.

Patent Document 1 discloses a blind nut comprising a plastically deformable tubular member, a flange member formed on one edge of the tubular member, and a screw member formed on the other edge of the tubular member. The tubular member is thin; therefore, it can be bent to be mounted onto the mounted member and a bolt can be screwed onto the screw member formed therein. The screw member is thicker than the tubular member and is provided inside the tubular member.

With a traditional blind nut, the screw member is provided below the tubular member so that it has been necessary that there be some distance in the height direction. In Patent Document 1, the screw member is provided inside the tubular member in order to be closer to the location where the bolt is mounted, thus shortening the length of the blind nut. Moreover, uselessly utilizing a long bolt is no longer necessary.

However, in the blind nut disclosed in Patent Document 1, the screw member and the tubular member to be bent are formed as an integrated body by utilizing a soft material. The screw member is provided inside the tubular member; the screw member is formed to be thicker than the tubular member in order to assure the strength for retaining the screw, and the tubular member surrounds the outer perimeter of the screw member. Thus, the outer diameter of the blind nut has become larger. Moreover, in order to assure the screw-retaining strength, the screw member must have a certain length, and the screw member must be quenched.

Patent Document 2 discloses a blind nut comprising a main body made of a plastically deformable material such as metal and the like, and a nut member constituted separately from the main body with a rigid material, such as metal, and the like. The main body has a hollow tubular member and a flange formed on one edge of the tubular member. The nut member has a female screw member and a coupling member. The nut member is provided inside the main body. The female screw member of the nut member is provided adjacent to the flange; the extended tubular member of the tubular member at a location separate from the flange is treated with a drawing process and coupled with the coupling member of the nut member.

In the blind nut disclosed in Patent Document 2, since the nut member is not to be plastically deformed, it is formed using a material having a high degree of hardness in order to achieve a great fastening strength. Moreover, the edge of the female screw of the nut member provided inside the main body moves to a location adjacent to the flange to decrease useless space formed between the female screw of the nut and the mounted member. However, in Patent Document 2, since the extended tubular member of the tubular member is treated by a drawing process and coupled with the coupling member of the nut member, the drawn portion must have a certain height for coupling. Moreover, only the extended tubular member is drawn and coupled with the coupling member, and the female screw member provided above the coupling member is not drawn. In this way, the coupling member and the female screw member are aligned in the height direction, and the height of the nut member greatly increases. Moreover, it is possible that the lower portion of the female screw of the female screw member of the nut member become deformed.

Patent Document 3 discloses a fastening tool comprising a tubular main body having a flange, a horizontal cylindrical surface and an annular lug extending inwardly adjacent to the rear end; a nut having a head member and a collar member extending from the head member through the lug; and a ring surrounding the middle portion of the collar. The peripheral portion of the nut is curved outwardly to form a retainer which prevents the ring from being separated from the collar member.

As the fastening tool disclosed in Patent Document 3 fixates the tubular main body and the nut, an annular lug is formed on the tubular main body. The annular lug is provided between the ring and the flange of the tubular main body, so that the height of the fastening tool increases. Moreover, the fastening tool disclosed in Patent Document 3 comprises three members; in other words, it is comprised of many parts. Furthermore, the process for curving the peripheral portion of the nut must be carried out, which increases the cost.

Due to the aforegoing, a blind nut low in height after being fastened has been in demand. Moreover, a blind nut with a small outer diameter and light in weight has been in demand.

Moreover, a blind nut that does not require the process for quenching a screw member has been in demand.

### [Prior Art Document]

### [Patent Document]

[Patent Document 1] JP 2010-144901
[Patent Document 2] JP 2004-11876
[Patent Document 3] JP 2013-529768

### [Summary of the Invention]

### [Problem the Invention is to Solve]

Therefore, an object of the present invention is to provide a blind nut with a short height after fastening. Another object of the present invention is to provide a blind nut with a small outer diameter that is lightweight.

### [Means for Solving the Problem]

In order to achieve the above stated objects, the blind nut of the present invention comprises a main body, which is formed with a plastically deformable soft material, and a nut member, which is formed with a hard material. The main body has a main body tubular member and a flange provided adjacent to the main body tubular member. The nut member has a nut base which takes a short cylindrical shape, and a nut cylinder member which is provided adjacent to the nut base and which has an outer diameter smaller than that of the nut base. A pass-through hole on which a female screw is formed along its length is formed. On the inside of the main body tubular member of the main body, the nut cylinder members of the nut member are provided, and the lower edge of the main body tubular member is in contact with the step of the nut base, and welded.

A first aspect of the present invention is a blind nut, which is to be mounted onto the mounting hole of a mounted member, comprising
a main body, which is formed with a plastically deformable soft material, which has a main body tubular member, and a flange provided on an edge of the main body tubular member, onto which center holes are formed; and
a nut member, which is formed with a hard material, which has a short cylindrical nut base having a circumferential step on the upper surface thereof, and nut cylinder members provided adjacent to the step and having outer diameters smaller than that of the nut base, onto which a pass-through hole having a female screw is formed;
wherein the nut cylinder members of the nut member are provided inside the main body tubular member of the main body, and
the lower edge portion of the main body tubular member is in contact and coupled with the step of the nut base.

When the main body formed with a plastically deformable soft material and the nut member formed with a hard material are combined, the screw-fastening strength can be achieved in the nut member, which makes it possible to plastically deform the main body and fixate it.

When the nut cylinder members of the nut member are provided inside the main body tubular member of the main body, the height of the blind rivet can be decreased.

When the lower edge surface of the main body tubular member is in contact with the step of the nut base, the main body tubular member can easily be plastically deformed by lifting the nut member up.

As disclosed in Patent Literature 2, if the main body tubular member of the main body is drawn and then coupled with the nut cylinder members of the nut member, the female screw of the nut member might be deformed. In the present invention, only the lower portion edge of the main body tubular member is coupled with the step of the nut base; thus, the female screw of the nut member will not be deformed.

Preferably, the nut member and the main body tubular member of the main body are inserted into the mounting hole of the mounted member, a part of the main body tubular member is plastically deformed to be enlarged, and the mounted member is sandwiched between the deformed enlarged-diameter portion and the flange to mount the blind nut onto the mounted member.

When a part of the main body tubular member is plastically deformed to be enlarged by the fastening tool, the blind nut can be easily mounted onto the mounted member.

The lower edge surface of the main body tubular member is preferably coupled with the step of the nut base by means of welding.

When the lower edge surface of the main body tubular member and the step of the nut base are welded, plastic deformation can be conducted right above the lower edge surface of the main body tubular member to achieve enlargement, and, thus, the enlarged portion does not contain any wasted portion.

The main body tubular member preferably has a first tubular member, which is distant from the flange and takes a cylindrical shape; and a second tubular member, which is close to the flange and takes a cylindrical shape, having a hexagonal or square cross-sectional shape.

When the second tubular member takes a hexagonal or square shape, and when the mounting hole of the mounted member also takes a hexagonal or square shape, it becomes possible to retain the blind nut so that it does not rotate.

A knurl is preferably formed on the outer peripheral surface of the main body tubular member adjacent to the flange.

If the knurl is formed on the outer peripheral surface of the main body tubular member, when the diameter of the main body tubular member is enlarged, the knurl comes in contact with the mounted member to retain the blind nut so as not to rotate.

It is preferable that the pass-through hole of the nut member have an inner diameter that is constant across the entire length of the nut member; the female screw is formed across the entire length of the pass-through hole.

The screw is retained across the entire nut member, which makes it possible to decrease the height of the nut member.

The nut cylinder members of the nut member preferably comprise a first cylinder member provided adjacent to the nut base; and a second cylinder member adjacent to the first cylinder member and with an outer diameter smaller than that of the first cylinder member.

If the outer diameter of the second cylinder member is smaller than that of the first cylinder member, when the main body tubular member of the main body is plastically deformed and mounted onto the mounted member, the second cylinder member can be easily inserted therein.

A second aspect of the present invention is a structure in which the blind nut is mounted onto the mounting hole of the mounted member,
wherein the blind nut comprises a main body, which is formed with a plastically deformable soft material, which has a main body tubular member and a flange provided on an edge of the main body tubular member, and onto which center holes are formed; and
a nut member, which is formed with a hard material, which has a short cylindrical nut base having a circumferential step on its upper surface, and nut cylinder members provided adjacent to the step and having an outer diameter smaller than that of the nut base, and
onto which a pass-through hole having a female screw is formed;
wherein the nut cylinder members of the nut member are provided inside the main body tubular member of the main body, and the lower edge surface of the main body tubular member is in contact and coupled with the step of the nut base,
the nut member and the main body tubular member of the main body are inserted into the mounting hole of the mounted member, and the mounted member is sandwiched between the enlarged-diameter portion formed by enlarging a part of the main body tubular member and the flange for the blind nut to be mounted onto the mounted member.

The enlarged-diameter portion of the main body tubular member is preferably enlarged right above the lower edge surface of the main body tubular member.

When the enlarged- portion of the main body tubular member is enlarged right above the lower edge surface of the main body tubular member, the height of the main body can be decreased; thus, the height of the blind nut can be decreased as well.

It is preferred that the male screw on the shank of a bolt be engaged with he female screw of the nut member, and that the mounting member be sandwiched and mounted between the flange of the main body member and the head of the bolt.

When the bolt is screwed onto the nut member, the mounting member can be easily mounted onto the mounted member.

### [Effects of the Invention]

According to the present invention, it is possible to obtain a blind nut short in height after it is fastened. Moreover, it is possible to obtain a blind nut with a smaller outer diameter and lighter in weight.

### [Brief Explanation of the Drawings]

[Figure 1(a)] Figure 1(a) is a cross-sectional view showing the state in which the traditional blind nut is set on the mounted member; and Figure 1(b) is a cross-sectional view showing the blind nut mounted on the mounted member.
[Figure 2] Figure 2 is an oblique view showing the main body of the blind nut of an embodiment of the present invention.
[Figure 3] Figure 3 is a top view of the main body shown in Figure 2.
[Figure 4] Figure 4 is a front view of the main body shown in Figure 2.
[Figure 5] Figure 5 is a bottom view of the main body shown in Figure 2.
[Figure 6] Figure 6 is a cross-sectional view along the A-A line shown in Figure 4 of the main body shown in Figure 2.
[Figure 7] Figure 7 is an oblique view showing the nut member of the blind nut of an embodiment of the present invention.
[Figure 8] Figure 8 is a top view of the nut member shown in Figure 7.
[Figure 9] Figure 9 is a front view of the nut member shown in Figure 7.
[Figure 10] Figure 10 is a cross-sectional view along the A-A line shown in Figure 9 of the nut member shown in Figure 7.
[Figure 11] Figure 11 is an oblique view showing the state in which the nut member shown in Figure 7 is not yet inserted into the main body shown in the main body shown in Figure 2.
[Figure 12] Figure 12 is an oblique view depicting the state in which the nut member shown in Figure 7 is inserted into the main body shown in the main body as illustrated in Figure 2.
[Figure 13] Figure 13 is a top view of the blind nut shown in Figure 12.
[Figure 14] Figure 14 is a front view of the blind nut shown in Figure 12.
[Figure 15] Figure 15 is a cross-sectional view along the A-A line shown in Figure 14 of the blind nut shown in Figure 12.
[Figure 16] Figure 16 is a cross-sectional view showing the state in which the blind nut is mounted onto the mounted member.
[Figure 17] Figure 17 is a cross-sectional view showing the state in which another mounting member is mounted by means of a bolt onto the blind nut which has been mounted onto the mounted member.

### [Modes for Embodying the Invention]

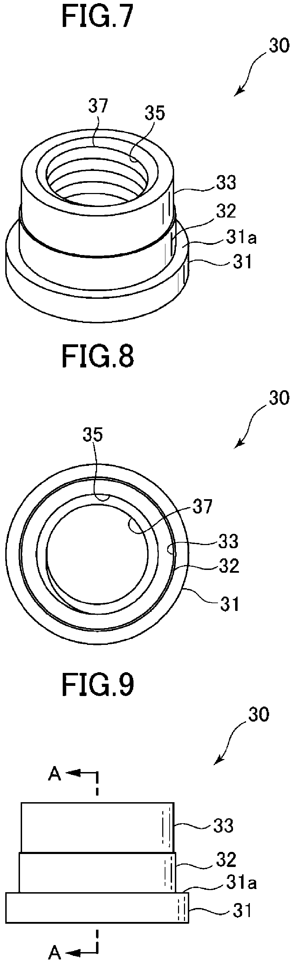

An explanation of blind nut 10 of an embodiment of the present invention shall be given below with reference to the drawings. Figures 2 to 6 show main body 20 of blind nut 10, and Figures 7 to 10 show nut member 30 of blind nut 10.

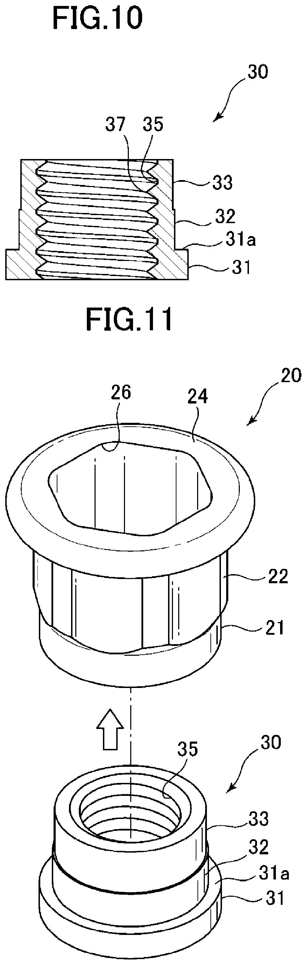

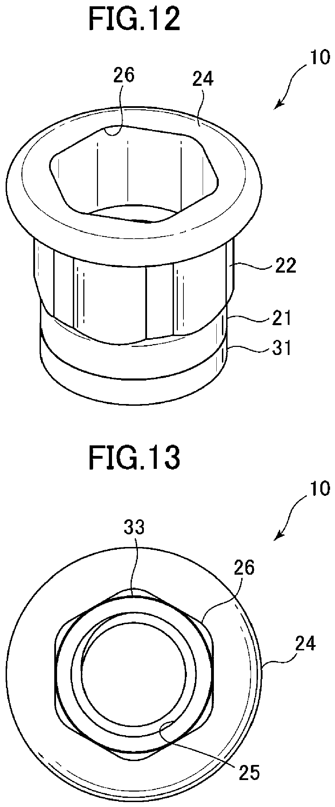

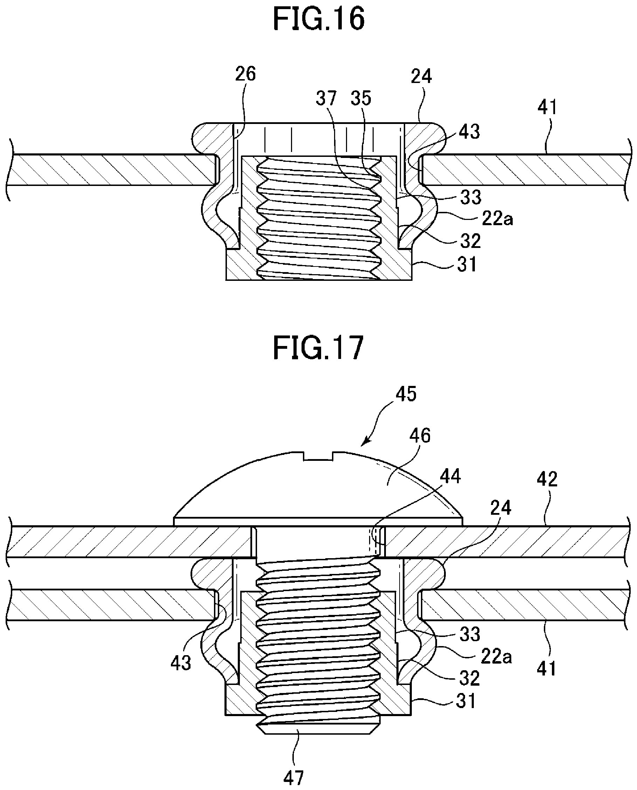

Figure 11 shows the state in which main body 20 and nut member 30 are not yet coupled, and Figures 12 to 15 show the state in which main body 20 and nut member 30 are coupled. Figure 16 shows the state in which blind nut 10 is mounted onto mounted member 41, and Figure 17 shows the state in which mounting member 42 is mounted by means of bolt 45 onto blind nut 10 which has been mounted onto mounted member 41.

Blind nut 10 of an embodiment of the present invention comprises main body 20, which is formed with a plastically deformable material such as metal and the like; and nut member 30, which is formed with a rigid material such as metal and the like. As shown in Figure 11, nut member 30 is inserted from the lower side of main body 20, and the lower edge surface of main body 20 and step 31a of nut base 31 of nut member 30 are welded by means of laser welding to form blind nut 10.

Blind nut 10, which has been formed in an integrated manner, is inserted into mounting hole 43 of mounted member 41; the diameters of first tubular member 21 and second tubular member 22 of main body 20 are enlarged by utilizing the fastening tool to mount blind nut 10 onto mounting hole 43. Subsequently, bolt 45 is caused to be screwed onto female screw 37 of nut member 30 in order to mount mounting member 42 onto blind nut 10.

### (Main body)

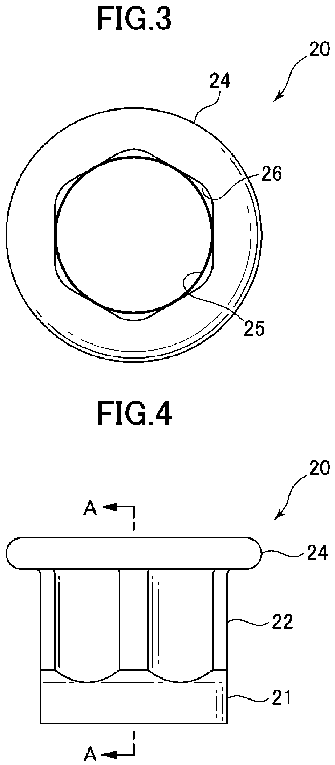

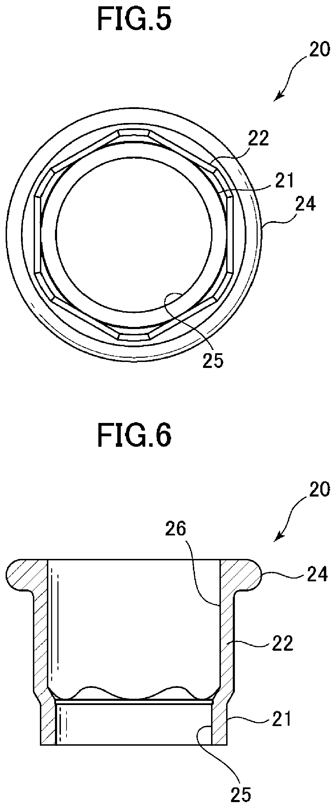

An explanation regarding main body 20 of blind nut 10 shall be given below, with reference to Figures 2 to 6. Figure 2 is an oblique view showing main body 20 of blind nut 10. Figure 3 is a top view, Figure 4 is a front view, and Figure 5 is a bottom view, respectively. Figure 6 is a cross-sectional view along the A-A line shown in Figure 4 of main body 20.

Main body 20 is formed with a plastically deformable material such as metal, and the like. Main body 20 possesses first tubular member 21 on one edge thereof. First tubular member 21 takes a cylindrical shape, and first center hole 25 of which the cross-sectional surface takes a circular shape is formed thereon. The outer diameter of first tubular member 21 is smaller than the inner diameter of mounting hole 43 of mounted member 41. The inner diameter of first tubular member 21 is either equivalent to or slightly larger than that the outer diameter of first cylinder member 32 of nut member 30 in order to receive first cylinder member 32. Alternatively, the inner diameter of first tubular member 21 may be designed to be slightly smaller than the outer diameter of first cylinder member 32 of nut member 30 so that first cylinder member 32 of nut member 30 is pressed in.

Second tubular member 22 is provided adjacent to the upper portion of first tubular member 21. The cross-sectional surface of second tubular member 22 takes a hexagonal shape, and second center hole 26 is provided thereon. The outer cross-sectional surface takes a hexagonal shape, and the apexes thereof are chamfered. The cross-sectional surface of second center hole 26 takes a hexagonal shape with rounded corners. The overall shape of second tubular member 22 is a hexagonal cylinder. The size of second tubular member 22 is small enough to be inserted in mounting hole 43 of mounted member 41. First tubular member 21 and second tubular member 22 are parts that are to be plastically deformed in order to enlarge the diameters thereof when they are mounted onto mounted member 41.

In this embodiment of the present invention, the cross-sectional surface of second tubular member 22 is hexagonal; however, it may be square or circular. If the cross-sectional surface of second tubular member 22 is designed to be circular, the surface may be knurled to prevent rotation.

Mounting hole 43 of mounted member 41 may be hexagonal to match the shape of second tubular member 22; it may also be square or circular.

Main body 20 possesses flange 24, which is provided adjacent to the upper portion of second tubular member 22. The cross-sectional surface of flange 24 is circular on its outer surface; and second center hole 26 on its inner surface is hexagonal. In other words, second center hole 26 with a hexagonal cross-sectional surface is formed in the area extending from flange 24 to second tubular member 22. The outer diameter of flange 24 is larger than the outer diameter of second tubular member 22 and larger than the inner diameter of mounting hole 43 of mounted member 41.

Main body 20 is overall axially symmetrical around the center axis.

### (Nut member)

An explanation concerning nut member 30 of blind nut 10 is provided below with reference to Figures 7 to 10. Figure 7 is an oblique view showing nut member 30, Figure 8 is a top view and Figure 9 is a front view, respectively. Figure 10 is a cross-sectional view along the A-A line shown in Figure 9 of nut member 30.

Nut member 30 is formed using a rigid material such as metal, and the like. Nut member 30 comprises circular nut base 31, and nut cylinder members, which are provided adjacent to the upper portion of nut base 31. Nut cylinder members are separated into first cylinder member 32 and second cylinder member 33, which is provided adjacent to the upper portion of first cylinder member 32.

Nut base 31 of nut member 30 takes a cylindrical shape. The outer diameter of nut base 31 is approximately equal to the outer diameter of first tubular member 21 of main body 20.

The outer diameter of first cylinder member 32 is smaller than the outer diameter of nut base 31. The outer diameter of first cylinder member 32 is either approx.-imately equal to or slightly smaller than the inner diameter of first tubular member 21 of main body 20; alternatively, it is slightly larger in a manner so as to be pressed in. First tubular member 21 of main body 20 is primarily provided in the area surrounding first cylinder member 32. Circumferential step 31a of nut base 31 receives the lower edge of first tubular member 21 of main body 20. The length of first cylinder member 32 is approximately the same as the length of first tubular member 21 of main body 20.

Second cylinder member 33 takes a circular shape approximately the same as the shape of first cylinder member 32. The outer diameter of second cylinder member 33 is slightly smaller than the outer diameter of first cylinder member 32.

Nut base 31, first cylinder member 32 and second cylinder member 33 share the same central axis.

When nut member 30 is combined with main body 20, second tubular member 22 of main body 20 is primarily provided in the area surrounding second cylinder member 33. The outer surface of second cylinder member 33 and hexagonally-shaped second center hole 26 of second tubular member 22 are provided so as to be slightly spaced from one another.

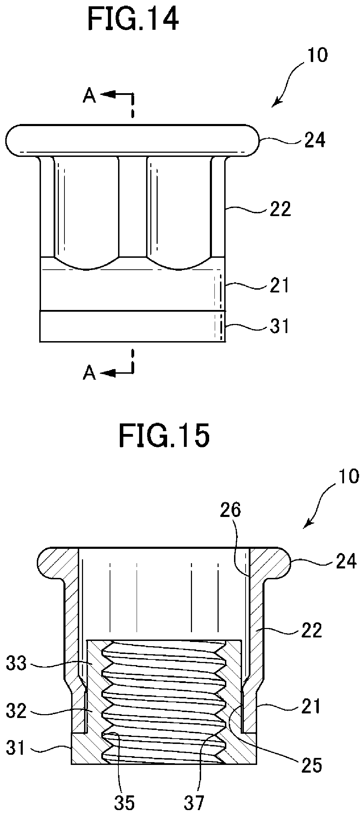

The length of second cylinder member 33 is less than the length of second tubular member 22 of main body 20. When main body 20 and nut member 30 are combined as shown in Figure 15, the upper edge of second cylinder member 33 is located at the middle height in the height direction of second tubular member 22.

In this embodiment of the present invention, the cylinder members of nut member 30 are separated into first cylinder member 32 and second cylinder member 33. However, first cylinder member 32 and second cylinder member 33 may have the same outer diameter and be constituted as one integrated nut cylinder member.

Pass-through hole 35 is formed in the area extending from the lower surface of nut base 31 to the upper surface of second cylinder member 33. The inner diameter of pass-through hole 35 is constant all the way across nut base 31, first cylinder member 32 and second cylinder member 33. Female screw 37 is formed in the area extending from the upper edge to the lower edge of pass-through hole 35. As stated below, main body 20 and nut member 30 are coupled by means of laser welding, so that the thread of female screw 37 of nut member 30 is not deformed. Due to the foregoing, female screw 37 can be formed all the length along nut member 30.

### (Blind nut)

An explanation regarding blind nut 10, in which main body 20 and nut member 30 are combined, is provided below with reference to Figures 11 to 15. Figure 11 is an oblique view showing the state in which nut member 30 is not yet inserted into main body 20. Figure 12 is an oblique view showing the state in which nut member 30 is inserted into main body 20; Figure 13 is a top view, and Figure 14 is a front view thereof, respectively. Figure 15 is a cross-sectional view along the A-A line shown in Figure 14 of blind nut 10.

As shown in Figure 11, nut member 30 is inserted with the second cylinder member first from first tubular member 21 of main body 20. As shown in Figure 15, the lower edge of first tubular member 21 is in contact with step 31a of nut base 31. The inner surface of first tubular member 21 of main body 20 is in contact with the outer peripheral surface of first cylinder member 32 of nut base 31. Second cylinder 33 of nut base 31 is provided inside second center hole 26 of main body 20. The cross-sectional surface of second center hole 26 takes a hexagonal shape, and the inner surface of second tubular member 22 is adjacent to second cylinder member 33 of nut member 30 in the central portion of each side of the cross-sectional hexagon. The upper surface of second cylinder 33 is positioned in the middle of the lengthwise direction of second tubular member 22.

In this state, the lower edge surface of first tubular member 21 of main body 20 and step 31a of nut base 31 are laser-welded to integrate main body 20 and nut member 30. Only the lower edge surface of first tubular member 21 and step 31a of nut base 31 are welded. Due to the foregoing, when blind nut 10 is mounted onto mounted member 41, the portion right above the lower edge surface of first tubular member 21 can be plastically deformed, and thus the height of blind nut 10 can be decreased.

First tubular member 21 and nut base 31 may be welded by means of welding methods other than laser-welding. Moreover, these members may be coupled by methods other than welding.

### (Mounting the blind nut)

Figure 16 is a cross-sectional view showing blind nut 10 mounted onto mounted member 41. Mounting hole 43 is formed on mounted member 41. The shape of mounting hole 43 is hexagonal so that second tubular member 22 having the hexagonal cross-sectional surface fits therein.

Alternatively, if the cross-sectional surface of second tubular member 22 is square or circular, the shape of mounting hole 43 may be matched up with the shape of second tubular member 22 to be square or circular.

When blind nut 10 is mounted onto mounted member 41, blind nut 10 is inserted into mounting hole 43 of mounted member 41 with nut base 31 first. The lower surface of flange 24 is in contact with the outer periphery of mounting hole 43 of mounted member 41.

The male screw of the screw mandrel of the fastening tool (not shown in the figures) is caused to rotate so as to be engaged with female screw 37 of nut member 30. When the nose piece (not shown in the figures) of the fastening tool comes in contact with the upper surface of flange 24, rotations of the screw mandrel are stopped. The screw mandrel is pulled strongly to the fastening tool without rotating it.

Nut base 31 of nut member 30 pushes up first tubular member 21 and second tubular member 22 of main body 20 in an upward direction. First tubular member 21 and second tubular member 22 are plastically deformed to form enlarged-diameter portion 22a. Mounted member 41 is sandwiched between the lower surface of flange 24 and enlarged-diameter portion 22a. The upper edge surface of second cylinder member 33 of nut member 30 has moved to a height that is approximately the same height as the lower surface of flange 24.

The outer diameter of second cylinder member 33 is slightly smaller than the outer diameter of first cylinder member 32, and there is a small space between second cylinder member 33 and second center hole 26 of main body 20. Therefore, even when the destination position of the upward movement of second cylinder member 33 is slightly varied, upward movement is possible.

When the fastening operation by the fastening tool is completed, the screw mandrel is reversely rotated to release engagement with female screw 37 of nut member 30.

In this way, blind nut 10 is mounted onto mounted member 41.

In prior art blind nut 1 shown in Figure 1(b), female screw 15 is provided below enlarged-diameter member 12a, which increases the overall height of blind nut 1.

In the blind nut of the embodiment of the present invention shown in Figure 16, female screw 37 of nut member 30 enters the inside of enlarged-diameter member 22a. Although the length of female screw 37 is sufficiently secured, the overall height of blind nut 10 is decreased.

In a prior art blind nut formed in an integrated manner, the portion to be enlarged and the female screw member to be engaged with a bolt were formed in an integrated manner. Because the portion to be engaged with the female screw was formed with a soft material that would easily be plastically deformed, the portion had to be thick and the outer diameter large.

In the blind rivet of the embodiment of the present invention, the portion to be enlarged and the female screw member are separate members; thus, the portion to be enlarged can be formed with a soft material, and the female screw member can be formed with a hard material. Due to the foregoing, the female screw member can be thinner. And also due to the foregoing, the outer diameter of the blind rivet can be decreased.

Moreover, in the blind nut formed in an integrated manner, the female screw member needed to be quenched. In the blind rivet of the embodiment of the present invention, the female screw member is formed with a hard material, and, thus, no quenching process is necessary.

Moreover, as regards a prior art blind rivet consisting of two parts in which the main body is drawn to be coupled with the nut member, it has been possible for the thread of the female screw member of the nut member to become deformed in the drawing process. Because of this, the female screw could not be formed on the portion of the nut member to be coupled with the main body; thus, it has been necessary to separate the coupling portion from the female screw portion, which increased the height.

In the blind rivet of the embodiment of the present invention, the main body and the nut member are coupled by means of laser-welding, and, thus, it is not likely that the thread of the female screw of the nut member will be deformed. Wherefore, it is possible for the female screw to be formed along the entire length of the nut member.

Figure 16 shows enlarged-diameter portion 22a being gradually enlarged. However, as shown in enlarged-diameter member 12a in Figure 1(b) showing the prior art, enlarged-diameter portion 22a may be enlarged to exhibit plastic deformation so as to be crushed in up and down direction.

### (Mounting the mounting member)

Figure 17 is a cross-sectional view showing the state in which mounting member 42 is mounted by means of bolt 45 onto blind nut 10 which has been mounted onto mounted member 41 shown in Figure 16. Bolt 45 having head 46 and shank 47 is prepared. The male screw of shank 47 can be engaged with female screw 37 of nut member 30. The position of pass-through hole 36 of nut member 30 and the position of mounting hole 44 of mounting member 42 are aligned to position mounting member 42 on flange 24 of blind nut 10. Shank 47 of bolt 45 is inserted through mounting hole 44 of mounting member 42 into pass-through hole 35 of nut member 30. The male screw provided on shank 47 of bolt 45 is caused to be engaged with female screw 37 of nut member 30 to mount mounting member 42 onto blind nut 10.

If mounting hole 43 of mounted member 41 takes a hexagonal shape, when bolt 45 is caused to be engaged, blind nut 10 is supported so as not to rotate within mounting hole 43.

In Figure 17, mounting member 42 is mounted on the side of flange 24 of blind nut 10; however, mounting member 42 may also be mounted on the side of nut base 31 (the lower side in Figure 17) of blind nut 10, which is the opposite side of the side shown in Figure 17.

In the embodiment of the present invention, the cross-sectional surface of second tubular member 22 is hexagonal. The cross-sectional surface of second tubular member 22 may take other polygonal shapes having other angular numbers. For example, the cross-sectional surface of second tubular member 22 may be square, or the cross-sectional surface of second tubular member 22 may be circular.

According to the embodiment of the present invention, it becomes possible to obtain a blind nut with a lower height after it is fastened. It also is possible to obtain a blind nut with a smaller outer diameter and lighter weight. It also is possible to obtain a blind nut that does not require quenching the screw member.

### [Explanation of Reference Numerals]

- 1:: Blind nut (prior art)
- 11:: Female screw member
- 12:: Tubular member
- 12a:: Enlarged-diameter portion
- 14:: Flange
- 15:: Female screw
- 10:: Blind nut
- 20:: Main body
- 21:: First tubular member
- 22:: Second tubular member
- 22a:: Enlarged-diameter portion
- 24:: Flange
- 25:: First center hole
- 26:: Second center hole
- 30:: Nut member
- 31:: Nut base
- 31a:: Step
- 32:: First cylinder member
- 33:: Second cylinder member
- 35:: Pass-through hole
- 37:: Female screw
- 41:: Mounted member
- 42:: Mounting member
- 43:: Mounting hole
- 44:: Mounting hole
- 45:: Bolt
- 46:: Head
- 47:: Shank

## Claims

1. Blind nut, which is to be mounted onto the mounting hole of a mounted member, comprising:
a main body, that is formed with a plastically deformable soft material, having a main body tubular member, and a flange provided on an edge of the main body tubular member, onto which center holes are formed; and
a nut member, formed with a hard material, having a short cylindrical nut base having a circumferential step on the upper surface thereof, and nut cylinder members provided adjacent to the step and having outer diameters smaller than that of the nut base, onto which a pass-through hole having a female screw is formed;
wherein the nut cylinder members of the nut member are provided inside the main body tubular member of the main body; and
the lower edge portion of the main body tubular member is in contact and coupled with the step of the nut base.

2. Blind nut of Claim 1,
wherein the nut member and the main body tubular member of the main body are inserted into the mounting hole of the mounted member,
a part of the main body tubular member is plastically deformed to be enlarged and
the mounted member is sandwiched between the deformed enlarged-diameter portion and the flange to mount the blind nut onto the mounted member.

3. Blind nut of Claims 1 or 2,
wherein the lower edge surface of the main body tubular member is coupled with the step of the nut base by means of welding.

4. Blind nut of any of Claims 1 to 3,
wherein the main body tubular member has a first tubular member which is distant from the flange and takes a cylindrical shape; and a second tubular member, which is close to the flange, which takes a cylindrical shape, having a hexagonal or square cross-sectional shape.

5. Blind nut of any of Claims 1 to 3,
wherein a knurl is formed on the outer surface of the main body tubular member adjacent to the flange.

6. Blind nut of any of Claims 1 to 5,
wherein the pass-through hole of the nut member possesses an inner diameter which is constant across the entire length of the nut member, and the female screw is formed across the entire length of the pass-through hole.

7. Blind nut of any of Claims 1 to 6,
wherein the nut cylinder members of the nut member comprise a first cylinder member which is provided adjacent to the nut base; and a second cylinder member which is provided adjacent to the first cylinder member with an outer diameter that is smaller than that of the first cylinder member.

8. Structure in which the blind nut is mounted onto the mounting hole of the mounted member, wherein the blind nut comprises:
a main body, formed with a plastically deformable soft material, which has a main body tubular member and a flange provided on an edge of the main body tubular member, onto which center holes are formed; and
a nut member, formed with a hard material, which possesses a short cylindrical nut base having a circumferential step on the upper surface thereof, and nut cylinder members provided adjacent to the step having an outer diameter smaller than that of the nut base, and
onto which a pass-through hole having a female screw is formed;
wherein the nut cylinder members of the nut member are provided inside the main body tubular member of the main body, the lower edge surface of the main body tubular member is in contact with and coupled with the step of the nut base;
the nut member and the main body tubular member of the main body are inserted into the mounting hole of the mounted member, and the mounted member is sandwiched between the enlarged-diameter portion formed by enlarging a part of the main body tubular member and the flange for the blind nut to be mounted onto the mounted member.

9. Structure according to Claim 8,
wherein the enlarged-diameter portion of the main body tubular member is enlarged right above the lower edge surface of the main body tubular member.

10. Structure according to Claims 8 or 9,
wherein the male screw of the shank of the bolt engages with the female screw of the nut member, and
the mounting member is sandwiched and mounted between the flange of the main body and the head of the bolt.
